# FASCICULE DE BREVET EUROPEEN

(11) **EP 0 647 169 B1**
(45) Date de publication et mention de la délivrance du brevet: **15.01.1997**
(21) Numéro de dépôt: 93913188.4
(22) Date de dépôt: 24.06.1993
(51) Int. Cl.: B23Q 15/14

(54) **PROCEDE ET DISPOSITIF POUR MAINTENIR UN ENSEMBLE D'OUTILS DANS UNE POSITION RELATIVE CONSTANTE PAR RAPPORT A UNE SURFACE NON PLANE, NOTAMMENT POUR UN CONTROLE SANS CONTACT**
VERFAHREN UND VORRICHTUNG INSBESONDERE ZUR KONTAKTLOSEN KONTROLLE, UM EINE WERKZEUGANLAGE IN EINER RELATIVEN KONSTANTEN LAGE IM VERGLEICH MIT EINER NICHT PLANEN EBENE ZU HALTEN
METHOD AND DEVICE FOR HOLDING A TOOL ASSEMBLY IN A CONSTANT POSITION RELATIVE TO A NON-PLANAR SURFACE, IN PARTICULAR FOR CONTACTLESS CHECKING

(30) Priorité: 25.06.1992 FR 9207787
(43) Date de publication de la demande: 12.04.1995
(73) Titulaire: SOCIETE DE CONSTRUCTION DES AVIONS HUREL-DUBOIS, F-92363 Meudon-La-Forêt Cédex (FR)
(72) Inventeur: ANORGA, François, F-92290 Chatenay-Malabry (FR); COMMINGES, Philippe, F-92310 Sèvres (FR)
(74) Mandataire: Sauvage, Renée
(86) Numéro de dépôt international: FR9300635
(87) Numéro de publication internationale: WO9400273

(56) Documents cités:
- WO-A-89/10237
- BE-A- 740 362
- DE-A- 4 106 987
- FR-A- 2 101 179
- US-A- 4 101 405

## Description

Procédé et dispositif pour maintenir un ensemble d'outils dans une position relative constante par rapport à une surface non plane, notamment pour un contrôle sans contact.

La présente invention concerne en premier lieu un procédé, permettant de maintenir un ensemble d'outils dans une position relative constante par rapport à une surface non plane, par exemple d'une pièce, l'ensemble d'outils et/ou la surface se déplaçant l'un par rapport à l'autre et devant demeurer écartés l'un de l'autre d'une distance constante. L'angle relatif moyen entre les outils et la surface doit, en outre, être maintenu.

Le type de problème rappelé ci-dessus se présente fréquemment lorsque l'on a à assurer un suivi de profil avec maintien de la normalité d'une pièce ayant une configuration non plane, c'est-à-dire présentant des rayons de courbure dont l'ensemble d'outils doit suivre l'évolution pour assurer sa tâche.

En général, jusqu'à présent, la solution consistait à utiliser un seul outil (on conviendra d'utiliser le terme "outil" aussi bien pour le cas d'un contrôle sans contact que pour tout autre cas nécessitant un suivi de profil) dont on assurait la normalité en chaque point de la pièce à travailler par apprentissage, ou par calcul à partir d'une définition géométrique théorique, ou à l'aide de palpeurs (US-A-4 101 405), ou encore par mesure d'angle (WO 89 10237).

On comprend que tout processus n'utilisant qu'un seul outil est lent et donc coûteux

Plus précisément, US-A-4 101 405 concerne une tête d'usinage, par contact, d'une pièce courbe ne comportant qu'un seul outil dont on souhaite que l'axe demeure perpendiculaire à un plan tangent à la cambrure de la pièce. Un système de palpeurs (105 ou 205) assure cette fonction.

D'un autre côté, selon WO 89 10237, on cherche à faire en sorte qu'un émetteur optique 10 demeure, à tout moment, perpendiculaire à une surface inclinée. Les modifications d'inclinaison de l'émetteur sont obtenues par une mesure trigonométrique de l'angle de la pente. Là aussi, on utilise un seul outil 10.

La présente invention se propose de remédier à ces inconvénients en utilisant plusieurs outils agissant simultanément, ce qui permet de réduire considérablement les temps de balayage de la surface nécessaires à la réalisation du travail.

Toutefois, l'utilisation de plusieurs outils travaillant simultanément sur une surface courbe pose des problèmes complexes et délicats qui tiennent notamment à la nécessité que chaque outil travaille perpendiculairement à la zone de la surface qui lui fait face et que la distance de chaque outil à la surface soit identique. Ceci est particulièrement vrai pour les opérations de contrôle sans contact de surface où l'on utilise l'émission d'une onde (ultrasonore, optique, électromagnétique, ...).

Le problème du maintien d'une distance identique entre tous les outils et la surface ne se pose évidemment pas dans US-A-4 101 405 et WO 89 10287 puisque les techniques décrites dans ces documents n'utilisent qu'un seul outil.

L'invention concerne un procédé qui répond parfaitement aux nécessités rappelées ci-dessus et qui se caractérise par le fait que l'on émet, à partir d'au moins deux points solidaires de l'ensemble d'outils, au moins deux signaux distincts en direction de la surface, ces signaux étant reçus, après réflexion sur la surface, par les points d'émission ou par des points de réception distincts proches des points d'émission respectifs ; on traite un des signaux réfléchis par la surface de façon à s'assurer que le signal émis correspondant parcourt une distance pré-établie constante, ce signal servant de référence ; on fixe un écart de temps maximal tolérable entre les temps de parcours des deux signaux depuis le moment de leur émission jusqu'au moment de leur réception ; et, dès que l'écart maximal tolérable est dépasse, on agit sur l'ensemble d'outils pour écarter ou rapprocher de la surface au moins l'un des points de l'ensemble d'outils d'où sont émis les signaux.

De cette manière, on obtient un auto-réglage de la position (distance et angle d'incidence) de l'ensemble d'outils par rapport à la surface.

Afin d'accroître le rendement des opérations demandées a l'ensemble d'outils, en balayant une zone de la surface maximale compte-tenu de la courbure, on aura intérêt à émettre plus de deux signaux à partir de points distincts de l'ensemble d'outils. Dans ce cas, on disposera de préférence tous les points d'émission à égale distance d'un point central d'émission du signal de référence (la répartition régulière des points est préférable pour optimiser les performances de balayage de l'ensemble d'outils, mais n'est pas nécessaire au fonctionnement de l'invention).

L'invention concerne également un dispositif mettant en oeuvre le procédé ci-dessus, caractérisé en ce qu'il comporte une platine portant au moins deux moyens d'émission et de reception de signaux disposés sensiblement perpendiculairement à la platine ; un moyen de commande permettant de rapprocher et/ou d'éloigner chacun des moyens d'émission de la surface de la pièce des moyens de détection de l'écart dans les temps de parcours des deux signaux depuis le moment de leur émission jusqu'au moment de leur réception ; et des moyens sollicitant, en fonction de la réponse des moyens de détection, le moyen de commande de déplacement des moyens d'émission par rapport à la surface.

Un des moyens d'émission et de réception émet un signal de référence assurant un maintien à distance constante du moyen d'émission par rapport à la surface. Un dispositif maintient sensiblement nul l'écart de temps de trajet des signaux des divers moyens d'émission et de réception en agissant sur l'orientation relative de la platine par rapport à la pièce, de sorte que le plan comportant les moyens d'émission et de réception soit maintenu sensiblement parallèle à la surface de la pièce.

Pour permettre le rapprochement ou l'éloignement des moyens d'émission, on pourrait prévoir diverses solutions techniques. Par exemple, on pourrait disposer d'une platine fixe sur laquelle les moyens d'émission seraient montés de façon mobile à la fois en translation (pour se régler à distance constante de la surface) et en pivotement (pour demeurer perpendiculaires à la surface).

Toutefois, on préfèrera un mode de réalisation selon l'invention plus simple et moins onéreux.

Selon ce mode de réalisation préféré, les moyens d'émission sont fixes par rapport à la platine qui les porte, tandis que le moyen de commande précité assure le pivotement de la platine autour d'au moins un axe (dans le cas de deux moyens d'émission) perpendiculaire au plan passant par les moyens d'émission de signaux, la platine étant alors montée de façon articulée sur un support muni d'un mouvement de translation qui sera choisi sensiblement perpendiculaire à la surface de la pièce à balayer.

Dans le cas où l'on dispose de plus de deux moyens d'émission sur la platine, celle-ci sera de préférence articulée autour d'un système de cardan pour pouvoir s'orienter dans toutes les directions.

Comme on l'a indiqué plus haut, l'invention peut s'appliquer aussi bien au cas d'un contrôle sans contact, qu'à tout autre cas nécessitant un suivi de profil et dans ce dernier cas, les moyens de détermination de distance (moyens d'émission et réception) seront couplés chacun avec un outil spécifique. Dans le premier cas, qui fera plus particulièrement l'objet de la description d'un exemple de réalisation, les moyens d'émission et de réception du signal sont constitués par des palpeurs émettant un signal, par exemple des palpeurs ultrasonores.

C'est un tel exemple, non limitatif, que l'on décrira à présent en référence aux dessins annexés, dans lesquels :
- la figure 1 est une vue schématique en perspective d'un ensemble d'outils selon l'invention conçu pour le contrôle sans contact de pièces ;
- la figure 2 est un schéma fonctionnel de l'installation selon l'invention ;
- la figure 3 est une vue schématique montrant une disposition de palpeurs ultrasonores ;
- les figures 4a, 4b, 5a, 5b, 6a et 6b sont des schémas explicatifs du fonctionnement.

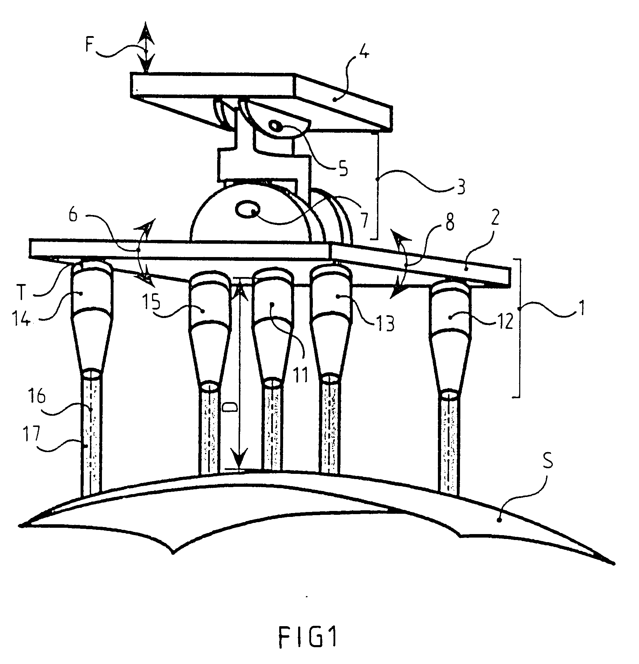

A la figure 1, on a représenté en S la surface d'une pièce à contrôler présentant une géométrie complexe, c'est-à-dire avec des rayons de courbure variés.

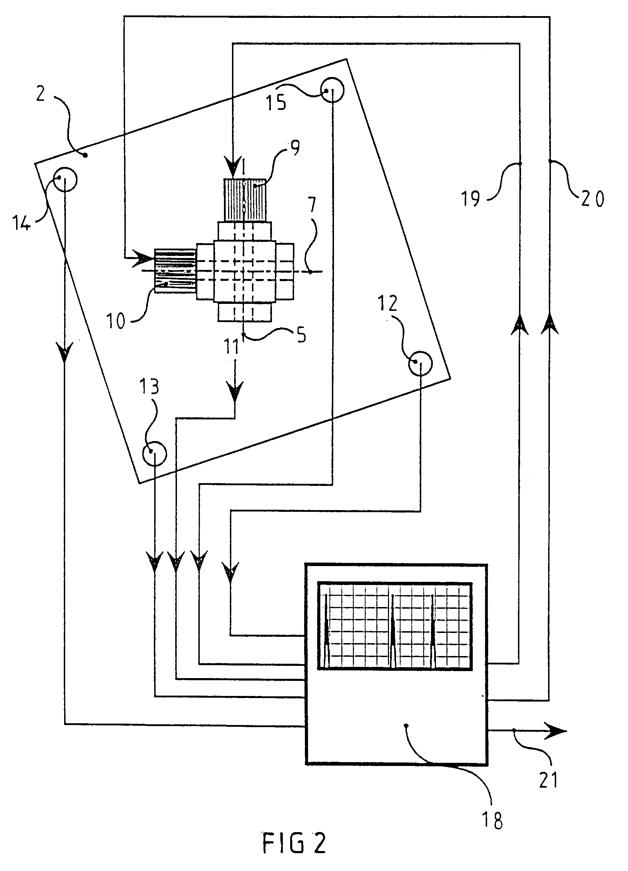

Un ensemble d'outils, désigné de façon générale en 1, est destiné à assurer le contrôle de la pièce par des mesures sans contact. A cet effet, l'ensemble 1 comprend une platine 2 articulée par l'intermédiaire d'un système de cardan 3, à un support 4, le système de cardan 3 permettant un basculement de la platine 2 par rapport au support, d'une part, autour de l'axe 5 selon la double flèche 6 et, d'autre part, autour de l'axe 7 selon la double flèche 8. Naturellement, le système de cardan représenté l'est à titre d'exemple et il pourrait être remplacé par tout système équivalent permettant à la platine 2 de se déplacer dans tous les plans. Les déplacements de la platine selon les flèches 6 et 8 peuvent être obtenus par tout moyen approprié, par exemple des moteurs 9 et 10 (figure 2).

Par ailleurs, l'ensemble support 4 - platine 2 est susceptible d'être animé d'un mouvement selon la direction F normale au support 4 afin d'assurer le rapprochement ou l'éloignement de l'ensemble d'outils de la surface S, ce mouvement étant assuré par un moteur non représenté et devant assurer le maintien de l'ensemble d'outils à une distance D constante de la pièce S.

La platine qui, dans l'exemple représenté, est de forme carrée, porte cinq palpeurs acoustiques 11, 12, 13, 14 et 15, le palpeur acoustique 11 étant situé au centre de la platine et les autres étant répartis, à égale distance, du palpeur acoustique 11, aux quatre sommets de la platine.

Les palpeurs acoustiques de type connus qui ne seront donc pas décrits en détail, sont constitués par des buses comportant des transducteurs T émettant une onde ultrasonore 16 dans un milieu guide (par exemple une veine d'eau 17) en direction de la surface S de la pièce à tester. Chaque buse munie d'un transducteur T est reliée à un appareil de mesure 18 de type appareil ultrason permettant de traiter, comme on l'indiquera plus loin, les signaux ultrasonores réfléchis par la surface S (voir figure 2).

L'appareil de mesure 18 est raccordé par ailleurs à chacun des moteurs 9 et 10 ainsi qu'au moteur non représenté réalisant le déplacement F, moteurs auxquels il est susceptible d'envoyer des signaux de commande par les circuits 19, 20 et 21.

Le principe de fonctionnement des palpeurs acoustiques repose, de façon connue, sur l'utilisation du signal ultrasonore réfléchi par la surface S. Le temps entre l'émission et le retour du signal est égal à 2 fois la distance du palpeur acoustique à la surface S que divise la vitesse du son dans le milieu de guidage (vaine d'eau). On peut donc maintenir constante la distance D entre palpeur acoustique et surface S en asservissant la position du palpeur acoustique au temps de trajet du signal ultrasonore.

Le calage de la platine sur une distance constante D est obtenu en traitant le signal ultrasonore de référence émis par le palpeur acoustique central 11 par l'appareil de mesure 18.

Pour que l'ensemble des palpeurs acoustiques donnent une mesure efficace et fiable, il est impératif que chacun de ceux-ci soit à tout moment dans une position quasi-perpendiculaire par rapport à la zone de la surface S qui lui fait face.

Cette perpendicularité (ou quasi-perpendicularité) des palpeurs acoustiques est obtenue en utilisant un principe proche de celui décrit ci-dessus appliqué aux palpeurs acoustiques périphériques et réalisant un pilotage de l'ensemble d'outils selon au moins un des axes 5 ou 7 (pour les surfaces S réglées) ou selon les axes 5 et 7 (application au cas des surfaces S complexes), de façon à minimiser les écarts des distances entre chaque palpeur acoustique et la surface S, en maintenant cette distance aussi voisine de D que possible.

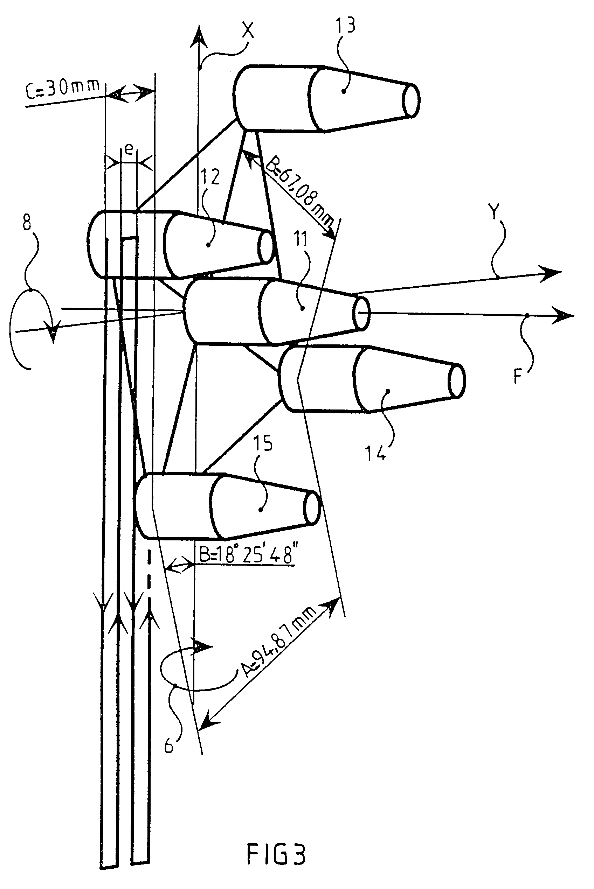

Dans le cas d'un dispositif à cinq palpeurs acoustiques comme celui qui est représenté à la figure 3, destiné a se déplacer en bloc selon des axes X et Y par rapport à la surface S, on fait en sorte que les palpeurs acoustiques soient écartés d'un pas C judicieux (multiple de 1, 1,5, 2, 2,5 et 3 mm) par exemple un pas de 30 mm. Dans ce cas, la platine est inclinée d'un angle de 18°25′48˝ par rapport à l'axe Y et deux palpeurs acoustiques 14 et 15 périphériques adjacents sont éloignés d'une distance A égale à 94,87 mm, tandis que la distance B entre le palpeur acoustique central 11 et chaque palpeur acoustique périphérique est de 67,08 mm.

Par un déplacement de la platine selon l'axe Y (axe de balayage) suivi d'un déplacement selon l'axe X (axe d'incrément) d'un petit pas e, on obtient un balayage de toute la surface S. Il est à noter que, compte-tenu de la disposition des palpeurs acoustiques décrite ci-dessus, les rôles des axes X et Y peuvent être inversés pour assurer un balayage suivant l'axe X et un incrément suivant l'axe Y.

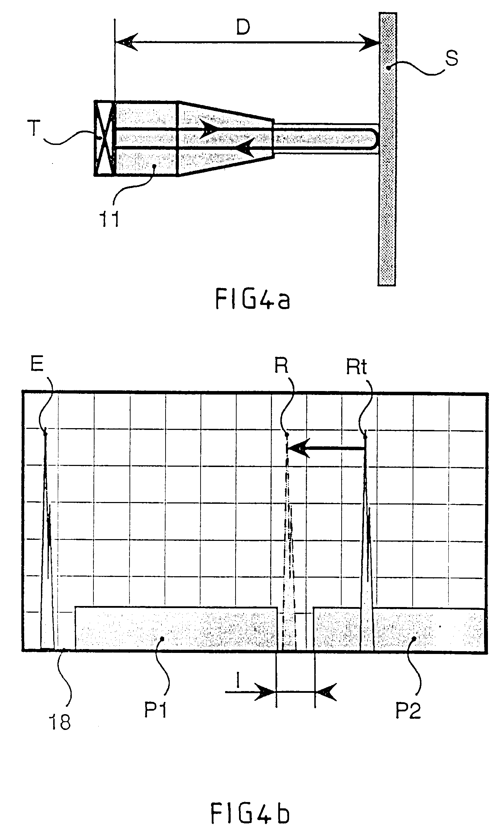

Sur l'ensemble des palpeurs acoustiques, on utilise le signal réfléchi du palpeur acoustique central 11 pour maintenir sa distance D constante par rapport à la pièce S. Pour cela, l'appareil de contrôle 18 est réglé pour disposer, comme on le voit à la figure 4b, de deux portes à apparition d'écho P₁ et P₂ asservies selon l'axe des temps à l'écho d'émission, délivrant une information analogique ou numérique lorsqu'un signal de tension supérieure à un seuil pré-établi est présent, ces deux portes étant séparées d'un intervalle de temps I correspondant à la précision de positionnement souhaitée. La porte P₁ est située avant l'intervalle de temps désiré I et la porte P₂ après.

Sur la figure 4b, on a représenté en E le signal d'émission du palpeur acoustique 11 (voir figure 4a) sur lequel les portes P₁ et P₂ sont temporellement asservies et en R le signal réfléchi par la surface S. Le signal R représenté en trait pointillé correspond à la distance D souhaitée entre palpeur acoustique et surface.

Si le signal réfléchi prend du retard et par exemple se situe comme le signal en trait plein Rt, il se trouve alors dans la porte P₂. L'appareil de mesure 18 va alors émettre un signal en direction de l'ensemble 1 pour agir sur celui-ci jusqu'à ce que le signal réfléchi se trouve dans la zone de temps désiré I. Cette action pourra par exemple prendre la forme d'un actionnement du moteur (non représenté) servant à rapprocher la platine 2 de la surface S suivant la direction F.

Comme on le comprend, lorsque le signal réfléchi se trouve dans la porte P₂, le système provoque le rapprochement du palpeur acoustique 11 par rapport à la surface S jusqu'à ce que le signal sorte de la porte P₂. A l'inverse, si le signal réfléchi se trouve dans la porte P₁, le système provoquera l'éloignement du palpeur acoustique 11 par rapport à la surface S jusqu'à ce que le signal sorte de la porte P₁.

On notera que le système décrit ci-dessus étant passif, l'absence de signal réfléchi ne provoque aucune correction de la distance relative palpeur acoustique / pièce (cas rencontré lorsque le palpeur acoustique dépasse le bord de la pièce au cours du balayage, par exemple).

Naturellement, le même résultat pourrait être obtenu par un traitement numérique du temps de trajet palpeur acoustique / pièce, obtenu par numérisation des signaux.

Le maintien de la perpendicularité entre les palpeurs acoustiques et la pièce S est obtenu par rotation de l'ensemble de la platine porte-palpeurs selon les flèches 6 et 8 de la figure 1.

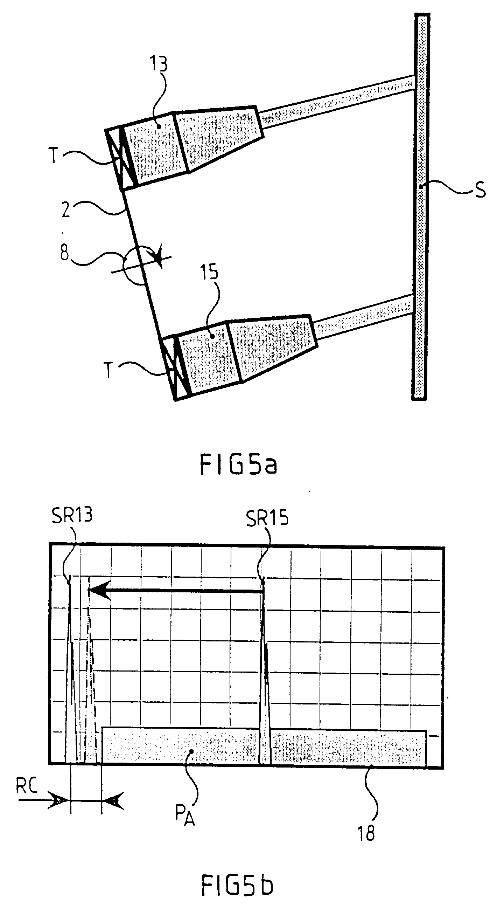

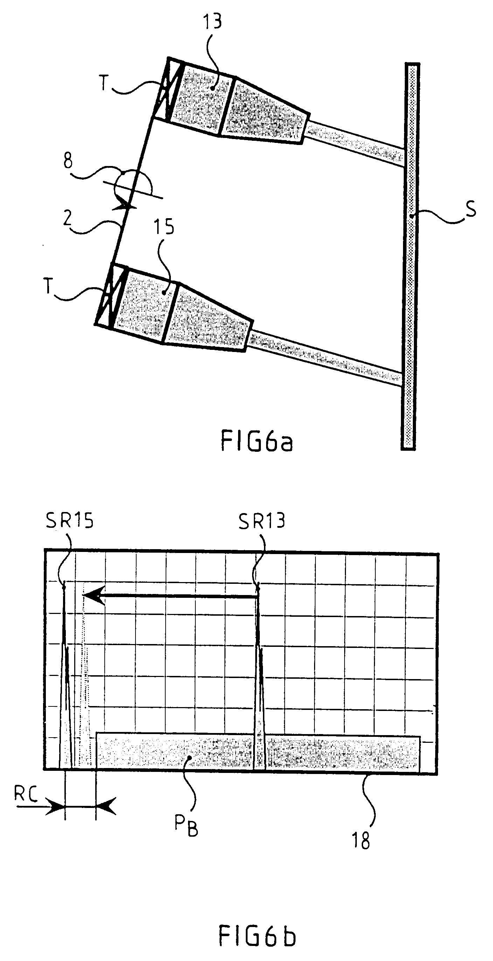

Pour atteindre ce résultat, on équilibre simplement la distance palpeur acoustique / pièce S des couples de palpeurs acoustiques opposés 13-15 et 12-14 de la manière que l'on décrira à présent en référence aux figures 5a, 5b, 6a et 6b.

A la figure 5a, on a représenté un cas où, du fait de la conformation de la pièce S, les deux palpeurs acoustiques opposés 13 et 15 se trouvent pour l'un éloigné de la surface S d'une distance supérieure à la distance D normale et pour l'autre à une distance de la surface S inférieure à D. Dans ce cas, le système de l'invention rétablit automatiquement la position normale des palpeurs acoustiques pour qu'ils reviennent pratiquement perpendiculaires à la surface S. Pour cela, un appareil de mesure 18 est conçu de façon que, sur l'axe des temps, existent deux portes à apparition d'écho P_{A} asservi sur l'écho réfléchi SR13 du palpeur acoustique 13 et P_{B} asservi à l'écho réfléchi SR15 du palpeur acoustique 15 (plages de temps définies) qui, si un signal réfléchi du palpeur acoustique opposé se situe dans une de ces portes, réagissent audit signal pour actionner le moteur 10 pour provoquer le déplacement de la platine 2 selon la flèche 8 (voir figure 5b).

De même, l'appareil de mesure 18, associé aux palpeurs acoustiques 12 et 14, actionne le moteur 9 pour provoquer le déplacement de la platine 2 selon la flèche 6.

Ainsi, comme on le voit à la figure 5b, la porte P_{A} est décalée avec un léger retard RC sur l'écho réfléchi SR13 du palpeur acoustique 13. Si l'écho réfléchi SR15 du palpeur acoustique 15 apparaît dans la porte P_{A} (comme représenté en trait continu), un signal est émis par l'appareil de mesure 18 pour faire tourner la platine 2 selon la flèche 8 en provoquant l'éloignement relatif du palpeur acoustique 13 de la pièce et donc un rapprochement relatif du palpeur acoustique 15 de la pièce, jusqu'à ce que l'écho réfléchi SR15 du palpeur acoustique 15 sorte de la porte P_{A} et vienne occuper la position en trait pointillé de la figure 5b.

De même, comme représenté à la figure 6b, la porte P_{B} étant calée avec un retard RC sur l'écho réfléchi SR15 du palpeur acoustique 15, si l'écho réfléchi du palpeur acoustique 13 apparaît dans la porte P_{B}, l'appareil de mesure 18 doit commander la rotation de la platine 2 selon la flèche 8 pour provoquer l'éloignement relatif du palpeur acoustique 15 et le rapprochement relatif du palpeur acoustique 13 jusqu'à ce que l'écho réfléchi SR13 du palpeur acoustique 13 sorte de la porte P_{B} et vienne occuper la position en trait pointillé.

On applique le même principe aux palpeurs acoustiques opposés 12 et 14 associés au moteur 9 pilotant le basculement selon la flèche 6. On a donc un double pivotement de l'ensemble platine-palpeurs acoustiques assurant une quasi-perpendicularité des palpeurs acoustiques par rapport à la surface de la pièce S.

Comme on l'a déjà indiqué, le système étant passif, l'absence de signal réfléchi ne provoque aucune correction de l'orientation de la platine support de palpeurs acoustiques par rapport à la pièce, notamment lorsqu'un des palpeurs acoustiques dépasse le bord de la pièce au cours d'un balayage comme décrit à la figure 3.

On comprend que la forme de réalisation décrite est simplement illustrative et que l'on pourrait utiliser, au lieu d'un double pivotement de la platine munie de palpeurs acoustiques fixes, une platine non orientable sur laquelle chaque palpeur acoustique serait monté de façon à pouvoir se déplacement axialement en translation et être orienté par pivotement autour d'un axe médian. Une telle solution serait cependant plus onéreuse que celle qui est décrite ci-dessus.

## Revendications

1. Procédé pour maintenir un ensemble d'outils (1) dans une position relative constante par rapport à une surface non plane (S), l'ensemble d'outils (1) et/ou la surface (S) se déplaçant l'un par rapport à l'autre et devant demeurer écartés l'un de l'autre d'une distance constante (D), caractérisé en ce que :
- on émet, à partir d'au moins deux points solidaires de l'ensemble d'outils (1), au moins deux signaux distincts en direction de la surface (S), ces signaux étant reçus, après réflexion sur la surface (S), par les points d'émission ou par des points de réception distincts proches des points d'émission respectifs,
- on traite un des signaux réfléchis par la surface (S) de façon à s'assurer que le signal émis correspondant parcourt une distance pré-établie constante (D), ce signal servant de signal de référence,
- on fixe un écart de temps maximal tolérable (I) entre les temps de parcours des deux signaux depuis le moment de leur émission jusqu'au moment de leur réception,
- et, dès que l'écart maximal tolérable (I) est dépassé, on agit sur l'ensemble d'outils (1) pour écarter ou rapprocher de la surface (S) au moins l'un des points de l'ensemble d'outils (1) d'où sont émis les signaux.

2. Procédé selon la revendication 1, dans lequel on émet plus de deux signaux à partir de points distincts de l'ensemble d'outils (1), caractérisé en ce qu'on dispose tous les points d'émission (12-15) à égale distance d'un point central d'émission (11) du signal de référence.

3. Procédé selon l'une quelconque des revendications 1 ou 2, caractérisé en ce qu'il est appliqué à un système de contrôle de pièce sans contact.

4. Dispositif destiné à travailler sur une pièce de surface non plane et mettant en oeuvre le procédé selon l'une quelconque des revendications 1 à 3, caractérisé en ce qu'il comporte :
- une platine (2) portant au moins deux moyens d'émission et de réception (11-15) de signaux disposés sensiblement perpendiculairement à la platine (2),
- un moyen de commande (9, 10) permettant de rapprocher et/ou d'éloigner chacun des moyens d'émission (11-15) de la surface (S) de la pièce,
- des moyens de détection (P_{A} ; P_{B}) de l'écart dans les temps de parcours des deux signaux depuis le moment de leur émission jusqu'au moment de leur réception, et
- des moyens (18) sollicitant, en fonction de la réponse des moyens de détection (P_{A}, P_{B}), le moyen de commande (9, 10) de déplacement des moyens d'émission par rapport à la surface (S).

5. Dispositif selon la revendication 4, caractérisé en ce que l'un des moyens d'émission et de réception (11) émet un signal de référence assurant un maintien à distance constante (D) du moyen d'émission par rapport à la surface.

6. Dispositif selon l'une quelconque des revendications 4 ou 5, caractérisé en ce que les moyens d'émission et de réception (11-15) de signaux sont fixes par rapport à la platine (2) qui les porte.

7. Dispositif selon la revendication 6, caractérisé en ce que le moyen de commande (9, 10) assure le pivotement de la platine (2) autour d'au moins un axe (5, 7) perpendiculaire au plan passant par les deux moyens d'émission de signaux, la platine (2) étant montée de façon articulée sur un support (4).

8. Dispositif selon l'une quelconque des revendications 5 à 7, comportant plus de deux moyens d'émission et de réception de signal, caractérisé en ce que le moyen d'émission (11) émettant le signal de référence est situé à égale distance de tous les autres moyens d'émission (12, 13, 14, 15).

9. Dispositif selon l'une quelconque des revendications 4 à 8, destiné au contrôle sans contact de pièces, caractérisé en ce que les moyens d'émission et de réception (11-15) du signal sont des palpeurs ultrasonores.

10. Dispositif selon l'une quelconque des revendications 4 à 8, caractérise en ce que le moyen de commande du pivotement de la platine est un moteur (9, 10) porté par le support-platine (4, 2).

11. Dispositif selon l'une quelconque des revendications 4 à 10, caractérisé en ce que le moyen de détection de l'écart des temps de parcours des signaux est constitué par un appareil ultrason (18).

12. Dispositif selon l'une quelconque des revendications 4 à 11, caractérisé en ce que le moyen sollicitant le moyen de commande (9, 10) de la platine est constitué par un signal adressé par l'appareil ultrason (18) audit moyen de commande.

## Claims

1. A method for keeping a set of tools (1) in a constant relative position with respect to a non-planar surface (S), the set of tools (1) and/or the surface (S) moving with respect to one another and having to remain spaced apart from one another by a constant distance (D), characterized in that :
- from at least two points integral with the set of tools (1), at least two separate signals are transmitted towards the surface (S), these signals being received, after reflection on the surface (S), by the transmission points or by separate receiving points close to the respective transmission points,
- one of the signals reflected by the surface (S) is processed so as to ensure that the corresponding transmitted signal travels a constant preset distance (D), this signal serving as a reference signal,
- a maximum tolerable time offset (I) is fixed between the travel times of the two signals from the moment when they are transmitted up to the moment when they are received,
- and, as soon as the maximum tolerable offset (I) is exceeded, action is taken on the set of tools (1) so as to separate or bring closer to the surface (S) at least one of the points of the set of tools (1) from where the signals are transmitted.

2. The method as claimed in claim 1, in which more than two signals are sent from separate points on the set of tools (1), characterized in that all the transmission points (12-15) are arranged at an equal distance from a central transmission point (11) of the reference signal.

3. The method as claimed in either of claims 1 or 2, characterized in that it is applied to a contactless component checking system.

4. A device intended to work on a component with a non-planar surface and implementing the method as claimed in any one of claims 1 to 3, characterized in that it includes:
- a plate (2) carrying at least two signal transmission and reception means (11-15), arranged substantially perpendicularly to the plate (2),
- a control mean (9, 10) making it possible to bring together and/or to separate each of the transmission means (11-15) of the surface (S) of the component,
- means (P_{A};P_{B}) for detecting the offset in the travel times of the two signals from the moment when they are transmitted up to the moment when they are received, and
- means (18) invoking the mean (9, 10) of controlling the movement of the transmission means with respect to the surface (S), depending on the response from the detection means (P_{A};P_{B}).

5. The device as claimed in claim 4, characterized in that one of the transmission and reception means (11) transmits a reference signal ensuring that the transmission means is kept at a constant distance (D) with respect to the surface.

6. The device as claimed in either of claims 4 or 5, characterized in that the signal transmission and reception means (11-15) are fixed with respect to the plate (2) which carries them.

7. The device as claimed in claim 6, characterized in that the control mean (9, 10) pivots the plate (2) about at least one axis (5, 7) perpendicular to the plane passing through the two signal transmission means, the plate (2) being mounted in an articulated way on a support (4).

8. The device as claimed in any of claims 5 to 7, including more than two signal transmission and reception means, characterized in that the transmission mean (11) transmitting the reference signal is situated at an equal distance from all the other transmission means (12, 13, 14, 15).

9. The device as claimed in any one of claims 4 to 8, intended for contactless checking of components, characterized in that the transmission and reception means (11-15) of the signal are ultrasonic sensors.

10. The device as claimed in any one of claims 4 to 8, characterized in that the mean of controlling the pivoting of the plate is a motor (9, 10) carried by the support-plate assembly (4, 2).

11. The device as claimed in any one of claims 4 to 10, characterized in that the means of detecting the offset in the journey times of the signals consists of an ultrasonic apparatus (18).

12. The device as claimed in any one of claims 4 to 11, characterized in that the mean invoking the mean of controlling (9, 10) the plate consists of a signal sent by the ultrasonic apparatus (18) to said check means.

## Patentansprüche

1. Verfahren zum Halten einer Gruppe von Werkzeugen (1) in einer konstanten Relativstellung bezüglich einer nicht ebenen Fläche (S), wobei die Gruppe von Werkzeugen (1) und/oder die Fläche (S) sich zueinander bewegen und in einem konstanten Abstand (D) voneinander angeordnet bleiben müssen, dadurch gekennzeichnet, daß
- von mindestens zwei mit der Gruppe von Werkzeugen (1) fest verbundenen Punkten aus in Richtung auf die Fläche (S) mindestens zwei verschiedene Signale gesendet werden, die nach Reflexion an der Fläche (S) von den sendenden Punkten oder von anderen, diesen nahegelegenen Punkten empfangen werden,
- eines der von der Fläche (S) reflektierten Signale so behandelt wird, daß das entsprechende gesendete Signal einen zuvor festgelegten konstanten weg (D) durchläuft, wobei es als Bezugssignal dient,
- eine maximal zugelassene Zeitdifferenz (I) zwischen den Laufzeiten der beiden Signale von dem Zeitpunkt ihrer Sendung bis zum Zeitpunkt ihres Empfangs festgelegt wird und,
- sobald die maximal zugelassene Zeitdifferenz (I) überschritten wird, auf die Gruppe von Werkzeugen (1) eingewirkt wird, um mindestens einen der Punkte der Gruppe von Werkzeugen (1), von denen aus die Signale gesendet werden, von der Fläche (S) zu entfernen oder dieser zu nähern.

2. Verfahren nach Anspruch 1, in welchem von verschiedenen Punkten der Gruppe von Werkzeugen (1) aus mehr als zwei Signale gesendet werden, dadurch gekennzeichnet, daß alle sendenden Punkte (12-15) in gleichem Abstand von einem das Bezugssignal sendenden zentralen Punkt (11) angeordnet werden.

3. Verfahren nach einem der Ansprüche 1 oder 2, dadurch gekennzeichnet, daß es auf ein System zur berührungsfreien Werkstückkontrolle angewandt wird.

4. Vorrichtung, die dazu bestimmt ist, auf einem Werkstück mit einer nicht ebenen Oberfläche zu arbeiten, und das Verfahren nach einem der Ansprüche 1 bis 3 anwendet, dadurch gekennzeichnet, daß sie folgendes aufweist:
- eine Platine (2), die mindestens zwei im wesentlichen senkrecht zu ihr angeordnete Einrichtungen (11-15) zum Senden und Empfangen von Signalen trägt,
- eine Steuereinrichtung (9, 10), die die Annäherung jeder der Sendeeinrichtungen (11-15) an die Fläche (S) des Werkstücks und/oder ihre Entfernung von dieser Fläche gestattet,
- Einrichtungen (P_{A}, P_{B}) zum Erfassen der Differenz zwischen den Laufzeiten der beiden Signale von dem Zeitpunkt ihrer Sendung bis zum Zeitpunkt ihres Empfangs und
- Einrichtungen (18), die die Steuereinrichtung (9, 10) zur Bewegung der Sendeeinrichtungen bezüglich der Fläche (S) in Abhängigkeit von der Reaktion der Erfassungsmittel (P_{A}, P_{B}) beaufschlagen.

5. Vorrichtung nach Anspruch 4, dadurch gekennzeichnet, daß eine der Sende- und Empfangseinrichtungen (11) ein Bezugssignal sendet, das gewährleistet, daß die Sendeeinrichtung in einem konstanten Abstand (D) von der Fläche gehalten wird.

6. Vorrichtung nach einem der Ansprüche 4 oder 5, dadurch gekennzeichnet, daß die Einrichtungen (11-15) zum Senden und Empfangen von Signalen bezüglich der sie tragenden Platine (2) feststehend sind.

7. Vorrichtung nachAnspruch 6, dadurch gekennzeichnet, daß die Steuereinrichtung (9, 10) das Verschwenken der an einem Halter (4) schwenkbar montierten Platine (2) um mindestens eine Achse (5, 7) gewährleistet, die zu der durch die beiden Sendeeinrichtungen laufenden Ebene senkrecht ist.

8. Vorrichtung nach einem der Ansprüche 5 bis 7 mit mehr als zwei Einrichtungen zum Senden und Empfangen von Signalen, dadurch gekennzeichnet, daß die das Bezugssigal sendende Sendeeinrichtung (11) in gleichem Abstand von allen anderen Sendeeinrichtungen (12, 13, 14, 15) angeordnet ist.

9. Vorrichtung nach einem der Ansprüche 4 bis 8 zur berührungsfreien Kontrolle von Werkstücken, dadurch gekennzeichnet, daß die Einrichtungen (11-15) zum Senden und Empfangen des Signals Ultraschallfühler sind.

10. Vorrichtung nach einem der Ansprüche 4 bis 8, dadurch gekennzeichnet, daß die Einrichtung zum Verschwenken der Platine ein von der Einheit Platine-Halter (4, 2) getragener Motor (9, 10) ist.

11. Vorrichtung nach einem der Ansprüche 4 bis 10, dadurch gekennzeichnet, daß die Einrichtung zur Erfassung der Differenz der Laufzeiten der Signale aus einem Ultraschallgerät (18) besteht.

12. Vorrichtung nach einem der Ansprüche 4 bis 11, dadurch gekennzeichnet, daß die die Einrichtung (9, 10) zur Steuerung der Platine beaufschlagende Einrichtung aus einem Signal besteht, das von dem Ultraschallgerät (18) an diese Steuereinrichtung adressiert wird.
